# EUROPÄISCHE PATENTSCHRIFT

(11) **EP 3 996 891 B1**
(45) Veröffentlichungstag und Bekanntmachung des Hinweises auf die Patenterteilung: **04.10.2023**
(21) Anmeldenummer: 20734180.1
(22) Anmeldetag: 22.06.2020
(51) Int. Cl.: B28B 7/00, B28B 7/08

(54) **WENDEVORRICHTUNG MIT EINER ZENTRIERVORRICHTUNG**
TURNING DEVICE WITH A CENTRING DEVICE
DISPOSITIF DE RETOURNEMENT AVEC UN DISPOSITIF DE CENTRAGE

(30) Priorität: 12.07.2019 AT 506382019
(43) Veröffentlichungstag der Anmeldung: 18.05.2022
(73) Patentinhaber: Progress Holding A.G., 39042 Brixen (IT)
(72) Erfinder: STOFNER, Helmut, 39058 Sarntal (IT); ENDERES, Karl Friedrich, 39042 Brixen (IT)
(74) Vertreter: Torggler & Hofmann Patentanwälte - Innsbruck
(86) Internationale Anmeldenummer: PCT/EP2020/067328
(87) Internationale Veröffentlichungsnummer: WO 2021/008818

(56) Entgegenhaltungen:
- EP-A1- 2 759 716
- AT-A1- 505 736
- AT-B- 322 193
- DE-A1- 2 940 864
- DE-U1- 20 315 702
- GB-A- 2 016 313

## Beschreibung

Die vorliegende Erfindung betrifft eine Wendevorrichtung, insbesondere Wendetraverse, zum Herstellen eines mehrschaligen Betonelements mit den Merkmalen des Oberbegriffs des Anspruchs 1 und eine Anordnung mit einer derartigen Wendevorrichtung und wenigstens einer Formenpalette zur Aufnahme einer Schale eines mehrschaligen Betonelements.

Zum Herstellen eines mehrschaligen Betonelements in Form einer Doppelwand umfassend zwei voneinander beabstandete Betonteile (sogenannte Schalen), die über metallische Bewehrungen miteinander verbunden sind, wird in der Regel eine Wendevorrichtung in Form einer sogenannten Wendetraverse verwendet. Mit einer Wendevorrichtung kann eine Formenpalette, auf der eine Schale eines mehrschaligen Betonelements angeordnet ist, angehoben, um 180° gedreht und abgesenkt werden. Insbesondere ist eine Wendevorrichtung in der Lage, eine erste Formenpalette, auf der eine erste Betonschicht mit vorstehenden Bewehrungen eingegossen wird (Erstschale) und anschließend aushärtet, nach dem Aushärten um 180° zu drehen und anschließend die erste Formenpalette mit der Erstschale auf eine zweite Formenpalette abzusenken, auf der eine zweite Betonschicht mit noch nicht ausgehärtetem Beton ruht, welche die Zweitschale bildet. Durch Absenken der Wendevorrichtung können nun die nach unten weisenden, vorstehenden Bewehrungselemente der bereits ausgehärteten ersten Betonschicht der Erstschale teilweise in den noch nicht ausgehärteten Beton der Zweitschale eindringen und damit die Verbindung mit derselben nach Aushärten des Betons herstellen. Das Ergebnis bildet eine Doppelwand umfassend die beiden verbundenen Schalen, welche nach dieser Vorfertigung auf einer Baustelle ausgegossen und damit als Fertigwand fertig gestellt werden kann.

Eine weitere Vorrichtung für die Herstellung von mehrschaligen Betonelementen ist in AT 322 193 B offenbart. Die darin offenbarte Vorrichtung umfasst zwei Formteile für je ein Betonelement. Die beiden Formteile sind durch Scharniere so miteinander verbunden, dass sie deckungsgleich zusammenklappbar sind, indem einer der beiden Formteile über den anderen Formteil geschwenkt wird. Zur Anpassung des Abstands zwischen den beiden Formteilen im zusammengeklappten Zustand ist entweder die Drehachse der Scharniere höhenverstellbar oder die Drehachse ist ortsfest und der nicht schwenkbare Formteil ist in der Höhe verstellbar.

DE 203 15 702 U1 offenbart eine gattungsgemäße Wendevorrichtung.

Zur Positionierung einer Formenpalette relativ zur Wendevorrichtung umfassen bekannte Wendevorrichtungen üblicherweise zwei voneinander beabstandete, an den Stirnseiten der Wendevorrichtung angeordnete Zentriervorrichtungen (bzw. Zentrierschwerter), zwischen denen die Formenpalette angeordnet ist. Jede Zentriervorrichtung umfasst eine sich entlang einer Längsrichtung verlaufende Nut zur Aufnahme eines Zentrierbolzens der Formenpalette, wobei die Nut einen Nutboden und zwei sich zugewandte Nutwände umfasst, die sich zwischen dem Nutboden und einer dem Nutboden gegenüberliegenden Nutöffnung erstrecken. Üblicherweise stirnseitig auf beiden Seiten der Formenpalette angeordnete Zentrierbolzen können in die Nuten der Zentriervorrichtungen eingeführt werden. Zur Aufnahme einer Formenpalette wird die Wendevorrichtung in Richtung der Formenpalette so weit abgesenkt, dass sich die beiden an den stirnseitigen Enden der Formenpalette angeordneten Zentrierbolzen in den Nuten der beiden Zentriervorrichtungen befinden. Die Nuten der Zentriervorrichtungen bilden somit Führungen für die Zentrierbolzen.

Bei herkömmlichen Zentriervorrichtungen sind die Nutwände durch Flachstähle gebildet und die Nutwände erstrecken sich im Wesentlichen rechtwinklig zum Nutboden. Der in die Nut einzuführende Zentrierbolzen ist würfelförmig ausgebildet und wird in der Nut mit einem Spiel geführt. So werden derzeit die beiden Formenpaletten für Erst- und Zweitschale durch eine Führung aus Flachstählen mit einem Spiel von etwa 3 mm in X-Richtung (zwischen den beiden Zentriervorrichtungen) und etwa 2 mm in Y-Richtung (quer zur X-Richtung in einer Ebene parallel zur den Formenpaletten) in der Wendetraverse zentriert. Durch das gegebene Spiel der Zentrierbolzen in den Nuten entsteht eine Relativbewegung beim Verdichtungsprozess. Dabei wird die mit der Verdichtung verspannte Palette (Zweitschale mit Frischbeton) in Bewegung gebracht. Diese Bewegung soll so gut wie möglich auf die Palette mit der Erstschale übertragen werden. Hier geschieht es nun, dass durch das Spiel zwischen Wendetraverse und Palette keine gleichmäßige Bewegung erzeugt werden kann. Die Palette mit der Erstschale eilt der Palette mit der Zweitschale nach. Die von der Verdichtung erzeugte Bewegungsenergie kann nur schlecht in die Erstschale bzw. die Wendetraverse übertragen werden. Weiterhin kommt es dazu, dass die Erst- und Zweitschale versetzt aufeinandergesetzt werden können, wodurch sich erhöhte Toleranzen an der fertigen Doppelwand ergeben.

Durch das Spiel der Zentrierbolzen in den Nuten kann also kinetische Energie, welche durch eine Verdichtung (Rütteln, Schütteln, Kreisschwingen) erzeugt wird, nicht gut in das System, bestehend aus der Wendetraverse, Erst- und Zweitschale übertragen werden. Die Energie wird lediglich über zwischen den Formenpaletten der Erst- und Zweitschale angeordnete Distanzhalter übertragen, wobei es zu einem teilweisen Kraftschluss durch die Reibung zwischen den Formenpaletten und den Distanzhaltern kommt. Zusätzlich erhöht das Gewicht der Wendetraverse die Reibung. Bei dem Verdichtungsprozess kommt es allerdings teilweise zu einem Kraftschlussverlust und die Energie kann über die Distanzhalter nicht ausreichend übertragen werden. Durch die ungenügende Energieübertragung wird der flüssige Beton der Zweitschale nur mäßig verteilt und kann die Gitterträger nicht vollständig umschließen. Weiterhin wird der flüssige Beton nur teilweise entlüftet und die induzierte Bewegungsenergie wird in nicht gewünschte Energien umgewandelt und kann somit nicht genutzt werden.

Auch eine genaue Positionierung der Erst- und Zweitschale kann mit herkömmlichen Zentriervorrichtungen auf Dauer nicht gewährleitet werden. Bei konventionellen Zentriervorrichtungen besteht ein Luftspalt zwischen Zentrierbolzen und Nut, welcher durch die erzeugte Bewegungsenergie der Verdichtung im Laufe der Zeit immer größer wird. Der Zentrierbolzen der Formenpaletten schlägt besonders im Bereich der Erstschale die Zentriervorrichtung aus. Hier kommt es dazu, dass die Erst- und Zweitschale nicht passgenau zueinander positioniert werden können und es im Laufe der Zeit zu immer größeren Verschiebungen kommt.

Es sind auch Zentriervorrichtungen bekannt, bei denen die Zentrierbolzen in den Nuten mittels einer Spannvorrichtung hydraulisch verspannt werden, indem die Zentrierbolzen jeweils gegen eine der Nutwände gedrückt werden und somit ein Formschluss in Y-Richtung hergestellt wird. In X-Richtung besteht dabei ein Reibschluss, wobei es während des Verdichtungsprozesses dazu kommen kann, dass der Reibschluss überwunden wird und sich somit die Formenpaletten bewegen können.

Aufgabe der Erfindung ist es, die vorbeschriebenen Nachteile zu vermeiden und eine gegenüber dem Stand der Technik verbesserte Wendevorrichtung anzugeben, welche insbesondere eine genauere Positionierung der Formenpalette und ein verbessertes Verdichtungsergebnis ermöglicht. Des Weiteren soll eine Anordnung mit einer derartigen Wendevorrichtung und wenigstens einer Formenpalette zur Aufnahme einer Schale eines mehrschaligen Betonelements angegeben werden.

Diese Aufgabe wird durch eine Wendevorrichtung mit den Merkmalen des Anspruchs 1 und eine Anordnung mit einer solchen Wendevorrichtung und wenigstens einer Formenpalette zur Aufnahme einer Schale eines mehrschaligen Betonelements gelöst. Vorteilhafte Ausführungsformen sind in den abhängigen Ansprüchen definiert.

Bei der Erfindung ist vorgesehen, dass sich die Nut ausgehend vom Nutboden in Richtung der Nutöffnung zumindest abschnittsweise verjüngt.

Dadurch, dass sich die Nut in Richtung der Nutöffnung verjüngt, kann bei korrespondierend ausgebildeten Zentrierbolzen ein Formschluss sowohl in Y-Richtung als auch in X-Richtung hergestellt werden. Dies erhöht die Genauigkeit der Positionierung der Formenpaletten in der Zentriervorrichtung, wodurch Toleranzen an der fertigen Doppelwand minimiert werden können. Wenn darüber hinaus der Zentrierbolzen mittels einer Spannvorrichtung in der Nut verspannt wird, wird durch die Verjüngung der Zentrierbolzen in Richtung des Nutbodens gedrückt, wodurch die Formenpalette auf Zug belastet wird und sich ein stabiler Formschluss in X- und Y-Richtung ergibt. Dadurch kann ein verbessertes Verdichtungsergebnis erzielt werden, da die erzwungenen Schwingungen einer Verdichtung, auf der Erst- und Zweitschale aufsitzen, besser in das Gesamtsystem übertragen werden können, wodurch Gitterträger besser mit Beton umschlossen werden und eine verbesserte Entlüftung des Frischbetons der Zweitschale hervorgerufen wird. Außerdem führt der verbesserte Formschluss zu einer Verschleißminimierung an der Zentriervorrichtung.

Vorzugsweise kann vorgesehen sein, dass die Nut entlang der Längsrichtung eine erste Nutwand und eine von der ersten Nutwand beabstandete und der ersten Nutwand zugewandte zweite Nutwand aufweist, wobei die erste Nutwand und/oder die zweite Nutwand ausgehend vom Nutboden in Richtung der Nutöffnung zumindest abschnittsweise schräg zum Nutboden verläuft bzw. verlaufen. Mit anderen Worten verlaufen dabei die Nutwände nicht parallel zueinander.

In einem Nutquerschnitt quer zur Längsrichtung der Nut verläuft zumindest eine der beiden Nutwände schräg zum Nutboden bzw. schließt mit dem Nutboden, der im Wesentlichen eben sein kann, einen spitzen Winkel ein. Die Nutwände können unmittelbar vom Nutboden abstehen oder auch beabstandet zum Nutboden angeordnet sein. Der Nutboden und die Nutwände bilden Begrenzungen der Nut.

Vorzugsweise befindet sich die Verjüngung der Nut im Bereich der Nutöffnung.

Gemäß einer bevorzugten Ausführungsform kann vorgesehen sein, dass die erste Nutwand und die zweite Nutwand in Richtung der Nutöffnung einander zugeneigt sind, wobei vorzugsweise ein Nutquerschnitt quer zur Längsrichtung der Nut im Wesentlichen schwalbenschwanzförmig ausgebildet ist. Ein im Wesentlichen schwalbenschwanzförmiger Nutquerschnitt bietet in Verbindung mit korrespondierend dazu ausgebildeten Zentrierbolzen einen optimalen Formschluss sowohl in X-Richtung also auch in Y-Richtung.

Bei einer weiteren bevorzugten Ausführungsform kann vorgesehen sein, dass die Nut an wenigstens einem Ende in Längsrichtung der Nut eine im Vergleich zur Nut aufgeweitete, vorzugsweise im Wesentlichen trichterförmige, Eintrittsöffnung aufweist. Eine entsprechend aufgeweitete Eintrittsöffnung erleichtert das Einführen der Zentrierbolzen. Ein äußerer Rand der Eintrittsöffnung kann dabei eine Kontur entsprechend der Kontur der Nut aufweisen. Es kann vorgesehen sein, dass die Nut an beiden Enden jeweils eine entsprechend aufgeweitete, vorzugsweise im Wesentlichen trichterförmige, Eintrittsöffnung aufweist. Dadurch können Zentrierbolzen von beiden Enden der Nut her erleichtert aufgenommen werden.

Gemäß einem besonders bevorzugten Ausführungsbeispiel kann vorgesehen sein, dass die Zentriervorrichtung eine Spannvorrichtung zur Fixierung des Zentrierbolzens in der Nut umfasst, wobei der Zentrierbolzen zwischen den zwei sich zugewandten Nutwänden aufnehmbar und durch die Spannvorrichtung fixierbar ist, wobei die Spannvorrichtung wenigstens eine sich zumindest abschnittsweise entlang einer Längserstreckung der Nut in Längsrichtung erstreckende Klemmvorrichtung umfasst, die zwischen einer Freigabeposition und einer Klemmposition bewegbar ist, wobei eine Klemmfläche der wenigstens einen Klemmvorrichtung eine der zwei sich zugewandten Nutwände oder einen Abschnitt derselben ausbildet, wobei ein Abstand zwischen den zwei sich zugewandten Nutwänden in der Klemmposition kleiner ist als in der Freigabeposition. In der Klemmposition der wenigstens einen Klemmvorrichtung kann der Zentrierbolzen in der Nut fixiert werden, indem er zwischen der Klemmfläche, die eine der beiden Nutwände oder einen Abschnitt derselben ausbildet, und der gegenüberliegenden Nutwand eingeklemmt bzw. verspannt wird.

Die wenigstens eine Klemmvorrichtung kann stufenlos oder in Stufen zwischen Klemmposition und Freigabeposition bewegbar sein.

Vorzugsweise kann vorgesehen sein, dass der Nutboden zur Begrenzung der Bewegung der wenigstens einen Klemmvorrichtung in Richtung der Klemmposition einen Anschlag aufweist.

Gemäß einer bevorzugten Ausführungsform kann vorgesehen sein, dass die Spannvorrichtung eine Bewegungsvorrichtung zur Bewegung der wenigstens einen Klemmvorrichtung zwischen der Freigabeposition und der Klemmposition umfasst.

Vorzugsweise kann dabei vorgesehen sein, dass die Bewegungsvorrichtung eine mit der wenigstens einen Klemmvorrichtung verbundene und quer zur Längsrichtung bewegbare Einschubvorrichtung und eine auf die Einschubvorrichtung einwirkende und in Längsrichtung bewegbare Längsschubvorrichtung umfasst, wobei die Einschubvorrichtung eine in Längsrichtung rampenförmige Wirkfläche aufweist, wobei die Längsschubvorrichtung eine an der rampenförmigen Wirkfläche anliegende, gegenläufig zur rampenförmigen Wirkfläche ausgebildete rampenförmige Betätigungsfläche aufweist, wobei durch eine Bewegung der Längsschubvorrichtung in Längsrichtung die Einschubvorrichtung quer zur Längsrichtung bewegbar ist. Die Einschubvorrichtung und die Längsschubvorrichtung sind dabei im Wesentlichen keilförmig ausgebildet (in Form von gegenläufigen Keilen) und wirken als Keilgetriebe zur Umsetzung einer in Längsrichtung der Nut (Z-Richtung) auf die Längsschubvorrichtung einwirkenden Spannkraft. Eine derartige in Z-Richtung einwirkende Spannkraft wird durch die rampenförmige Wirkfläche der Einschubvorrichtung und die gegenläufig dazu ausgebildete rampenförmige Betätigungsfläche der Längsschubvorrichtung um 90° umgelenkt und bewirkt eine Bewegung der Einschubvorrichtung in Y-Richtung (also in Richtung der gegenüberliegenden Nutwand). Durch die Ausbildung als Keilgetriebe wird außerdem die Spannkraft auf das bis zu 10-fache erhöht, d.h. die Klemmfläche der wenigstens einen Klemmvorrichtung kann mit einer Klemmkraft, die bis zum 10-fachen der Spannkraft, die auf die Längsschubvorrichtung einwirkt, beträgt, auf den Zentrierbolzen einwirken.

Vorzugsweise kann vorgesehen sein, dass die Bewegungsvorrichtung wenigstens eine in Längsrichtung verlaufende Längsführung zur Führung der Längsschubvorrichtung aufweist.

Vorzugsweise kann vorgesehen sein, dass die Bewegungsvorrichtung wenigstens eine quer zur Längsrichtung verlaufende Querführung zur Führung der Einschubvorrichtung aufweist.

Gemäß einer bevorzugten Ausführungsvariante kann vorgesehen sein, dass die Bewegungsvorrichtung zur Bewegung der Längsschubvorrichtung eine mit der Längsschubvorrichtung verbundene Antriebsvorrichtung, vorzugsweise einen Linearantrieb, umfasst. Bei der Antriebsvorrichtung kann es sich z.B. um einen hydraulischen, pneumatischen oder elektrischen Antrieb handeln. Bei einer Bewegung der Längsschubvorrichtung in Richtung ihrer Keilspitze bzw. ihres schmalen Keilendes gleitet die rampenförmige Betätigungsfläche der Längsschubvorrichtung entlang der rampenförmigen Wirkfläche der Einschubvorrichtung und die Einschubvorrichtung wird quer in Richtung der gegenüberliegenden Nutwand eingefahren, wodurch sich die Klemmfläche der wenigstens einen mit der Einschubvorrichtung verbundenen Klemmvorrichtung in Richtung der gegenüberliegenden Nutwand bewegt und damit einen in der Nut befindlichen Zentrierbolzen zwischen den Nutwänden einklemmen kann.

Bei einer Bewegung der Längsschubvorrichtung in entgegengesetzter Richtung (also in Richtung ihres breiten Keilendes) wird die Einschubvorrichtung in einer Richtung quer zur gegenüberliegenden Nutwand von der gegenüberliegenden Nutwand weg bewegt, wodurch sich die Klemmfläche der wenigstens einen mit der Einschubvorrichtung verbundenen Klemmvorrichtung weiter von der gegenüberliegenden Nutwand weg bewegt und damit einen in der Nut zwischen den Nutwänden eingeklemmten Zentrierbolzen freigeben kann.

Vorzugsweise kann vorgesehen sein, dass die Einschubvorrichtung quer zur Längsrichtung in Richtung der Längsschubvorrichtung vorgespannt ist. Dadurch liegen die rampenförmige Wirkfläche und die rampenförmige Betätigungsfläche immer aneinander an und die Einschubvorrichtung bewegt sich automatisch in einer Richtung quer zur Längsrichtung von der gegenüberliegenden Nutwand weg, wenn die Längsschubvorrichtung in Richtung ihres breiten Keilendes bewegt wird. Die Vorspannung kann durch einen Kraftspeicher (z.B. eine Feder) erfolgen.

Es kann auch vorgesehen sein, dass Längsschubvorrichtung und/oder Einschubvorrichtung eine Führungsvorrichtung zur Führung der Längsschubvorrichtung entlang der rampenförmigen Wirkfläche der Einschubvorrichtung aufweist bzw. aufweisen, wodurch die Längsschubvorrichtung bei Bewegungen sowohl in Längsrichtung als auch in entgegengesetzter Richtung entlang der rampenförmigen Wirkfläche gleiten kann und dabei die rampenförmige Wirkfläche und die rampenförmige Betätigungsfläche immer aneinander anliegen. Durch eine derartige Führungsvorrichtung kann auch ohne eine Vorspannung erreicht werden, dass bei einer Bewegung der Längsschubvorrichtung in Richtung ihres breiten Keilendes die mit der Einschubvorrichtung verbundene Klemmvorrichtung in Richtung einer Freigabeposition bewegt wird.

Des Weiteren wird Schutz begehrt für eine Anordnung mit einer Wendevorrichtung der vorstehend beschriebenen Art und wenigstens einer Formenpalette zur Aufnahme einer Schale eines mehrschaligen Betonelements, wobei die Formenpalette an wenigstens einem stirnseitigen Ende wenigstens einen Zentrierbolzen aufweist, der in die Nut der wenigstens einen Zentriervorrichtung einführbar ist, wobei der wenigstens eine Zentrierbolzen korrespondierend zur Nut, vorzugsweise im Wesentlichen schwalbenschwanzförmig, ausgebildet ist. Wenn ein Nutquerschnitt der Nut quer zur Längsrichtung der Nut im Wesentlichen schwalbenschwanzförmig ausgebildet ist und ein Bolzenquerschnitt des Zentrierbolzens quer zur Längsrichtung der Nut ebenfalls im Wesentlichen schwalbenschwanzförmig ausgebildet ist, ergibt sich ein optimaler Formschluss zwischen Zentrierbolzen und Nut sowohl in X-Richtung also auch in Y-Richtung.

Weitere Einzelheiten und Vorteile der vorliegenden Erfindung werden anhand der nachfolgenden Figurenbeschreibung erläutert. Dabei zeigen:
- Fig. 1: eine Wendevorrichtung mit vorgeschlagenen Zentriervorrichtungen oberhalb einer Formenpalette in einer Frontansicht,
- Fig. 2: die auf die Formenpalette abgesenkte Wendevorrichtung der Figur 1 in einer Draufsicht,
- Fig. 3a: eine vergrößerte Detaildarstellung eines Bereichs der Figur 2,
- Fig. 3b: eine vergrößerte Detaildarstellung eines weiteren Bereichs der Figur 2,
- Fig. 4a: eine vergrößerte Detaildarstellung eines Bereichs der Figur 3a,
- Fig. 4b: eine vergrößerte Detaildarstellung eines Bereichs der Figur 3b,
- Fig. 5a-5e: verschiedene Betriebsstellungen der Wendevorrichtung der Figur 1 während der Herstellung eines mehrschaligen Betonelements in Frontansichten,
- Fig. 6: die Wendevorrichtung der Figur 1 mit zwei übereinander angeordneten Formenpaletten mit Erstschale und Zweitschale eines mehrschaligen Betonelements,
- Fig. 7a: eine Draufsicht auf eine vergrößerte Detaildarstellung eines Bereichs der Figur 6 gemäß Sichtlinie C-C in Figur 6,
- Fig. 7b: eine Draufsicht auf eine vergrößerte Detaildarstellung eines weiteren Bereichs der Figur 6 gemäß Sichtlinie D-D in Figur 6,
- Fig. 8a: eine vergrößerte Detaildarstellung eines Bereichs der Figur 7a,
- Fig. 8b: eine vergrößerte Detaildarstellung eines Bereichs der Figur 7b,
- Fig. 9: eine perspektivische Ansicht auf eine vorgeschlagene Zentriervorrichtung in einer ersten Betriebsstellung,
- Fig. 10: eine Frontansicht auf die Zentriervorrichtung der Figur 9,
- Fig. 11: einen Querschnitt durch die Zentriervorrichtung der Figur 10 gemäß Schnittlinie A-A in Figur 10,
- Fig. 12: eine Draufsicht auf die Zentriervorrichtung der Figur 10,
- Fig. 13: eine perspektivische Ansicht auf die Zentriervorrichtung der Figur 9 in einer weiteren Betriebsstellung,
- Fig. 14: eine Frontansicht auf die Zentriervorrichtung der Figur 13,
- Fig. 15: einen Querschnitt durch die Zentriervorrichtung der Figur 14 gemäß Schnittlinie A-A in Figur 14 und
- Fig. 16: eine Draufsicht auf die Zentriervorrichtung der Figur 14.

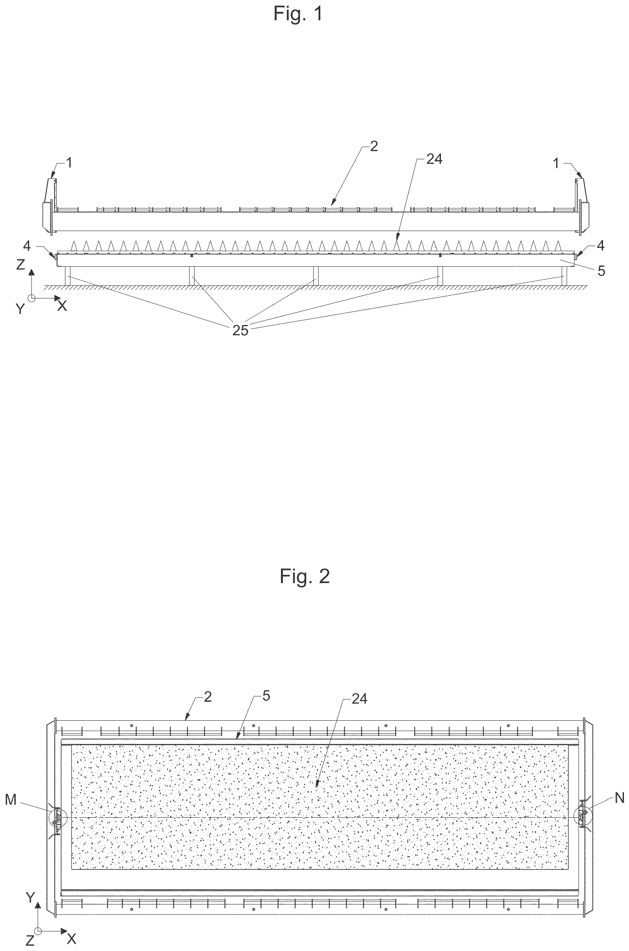

Die Figuren 1 bis 8b veranschaulichen den Prozess der Herstellung eines mehrschaligen Betonelements in Form einer Doppelwand unter Verwendung einer Wendevorrichtung 2 mit vorgeschlagenen Zentriervorrichtungen 1.

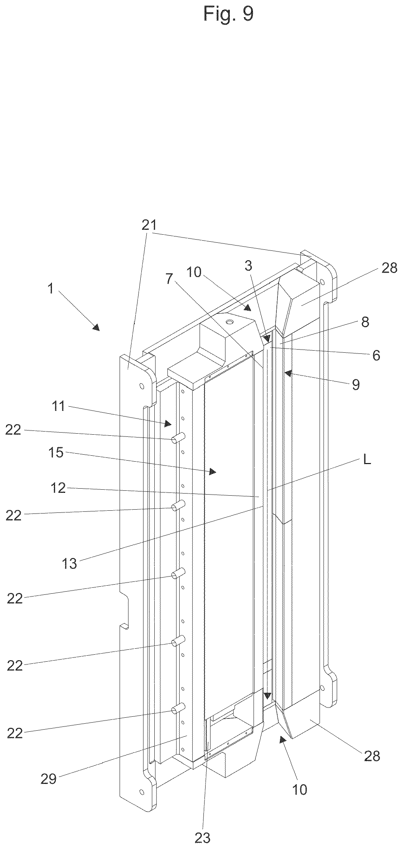

Figur 1 zeigt eine auf Bockrollen 25 angeordnete Formenpalette 5, die unterhalb einer Wendevorrichtung 2, die auch als Wendetraverse bezeichnet wird, angeordnet ist. Auf der Formenpalette 5 befindet sich eine Erstschale 24 (erste Betonschicht mit Bewehrung) für ein mehrschaliges Betonelement in Form einer Doppelwand. An den stirnseitigen Enden der Formenpalette 5 in einer X-Richtung ist jeweils ein Zentrierbolzen 4 angeordnet. Die Wendevorrichtung 2 umfasst zwei Zentriervorrichtungen 1, die ebenfalls an den stirnseitigen Enden (in X-Richtung) der Wendevorrichtung 2 angeordnet sind. Die beiden Zentriervorrichtungen 1 der Wendevorrichtung 2, die auch als Zentrierschwerter bezeichnet werden, befinden sich oberhalb der Zentrierbolzen 4 der Formenpalette 5. Jede der beiden Zentriervorrichtungen 1 umfasst eine in dieser Darstellung nicht ersichtliche, sich in einer Längsrichtung L (die parallel zur Z-Richtung der Darstellung verläuft) erstreckende Nut 3 (siehe Figur 9), in die ein jeweiliger Zentrierbolzen 4 der Formenpalette 5 eingeführt werden kann.

Die Formenpalette 5 mit der Erstschale 24 wird nun von der Wendevorrichtung 2 aufgenommen und verriegelt. Dafür wird die Wendevorrichtung 2 in einer Z-Richtung zur Formenpalette 5 mit Erstschale 24 abgesenkt. Zur erleichterten Aufnahme der Zentrierbolzen 4 der Formenpalette 5 in die Nuten 3 weisen die Nuten 3 an ihren in Richtung der Zentrierbolzen 4 weisenden Enden hier nicht ersichtliche aufgeweitete Eintrittsöffnungen 10 in Form von Einführschrägen auf. Aufgrund der sich dadurch ergebenden, im Wesentlichen trichterförmigen Eintrittsöffnungen 10 können die Zentrierbolzen 4 leichter in die Nuten 3 eingeführt werden. Durch das Einführen der Zentrierbolzen 4 der Formenpalette 5 in die Nuten 3 der Zentriervorrichtungen 1 erfolgt eine Positionierung der Formenpalette 5 relativ zur Wendevorrichtung 2.

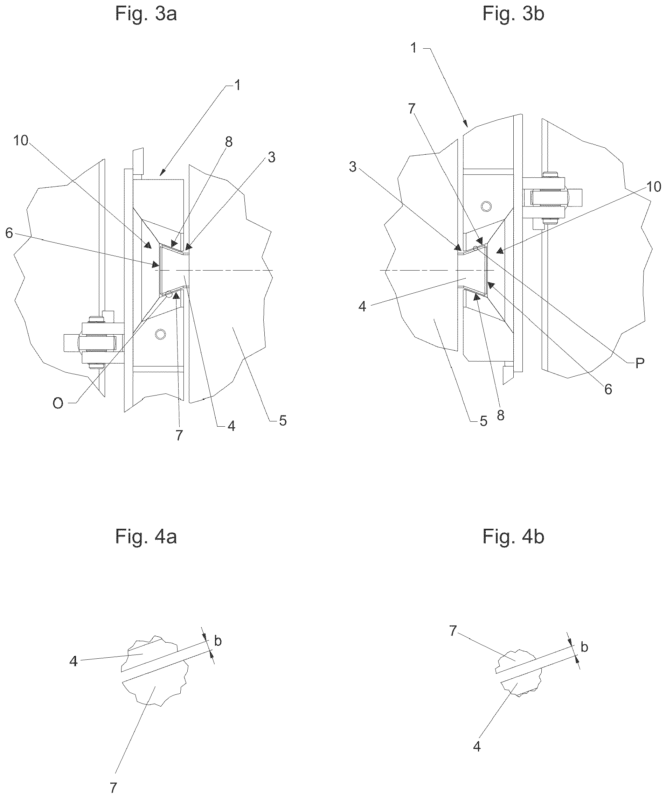

Figur 2 zeigt eine Draufsicht auf die auf die Formenpalette 5 abgesenkte Wendevorrichtung 2, Figur 3a zeigt eine vergrößerte Detaildarstellung des mit einem Kreis markierten Bereichs M der Figur 2, Figur 3b zeigt eine vergrößerte Detaildarstellung des mit einem Kreis markierten Bereichs N der Figur 2, Figur 4a zeigt eine vergrößerte Detaildarstellung des mit einem Kreis markierten Bereichs 0 der Figur 3a und Figur 4b zeigt eine vergrößerte Detaildarstellung des mit einem Kreis markierten Bereichs P der Figur 3b.

Wie insbesondere in den Detaildarstellungen der Figuren 3a und 3b gut ersichtlich ist, befinden sich die beiden Zentrierbolzen 4 der Formenpalette 5 in den Nuten 3 der Zentriervorrichtungen 1 der Wendevorrichtung 2. Jede der Nuten 3 umfasst einen Nutboden 6 und zwei sich zugewandte Nutwände 7, 8. Die Nutwände 7, 8 erstrecken sich jeweils zwischen dem Nutboden 6 und einer dem Nutboden 6 gegenüberliegenden Nutöffnung 9. Beide Nuten 3 sind jeweils ausgehend vom Nutboden 6 in Richtung der Nutöffnung 9 verjüngt ausgebildet. Im gezeigten Beispiel ist die Ausbildung einer jeweiligen Nut 3 so, dass die Nut 3 eine erste Nutwand 7 und eine von der ersten Nutwand 7 beabstandete und der ersten Nutwand 7 zugewandte zweite Nutwand 8 aufweist, wobei die erste Nutwand 7 und die zweite Nutwand 8 ausgehend vom Nutboden 6 in Richtung der Nutöffnung 9 schräg zum Nutboden 6 verlaufen. Die erste Nutwand 7 und die zweite Nutwand 8 sind in Richtung der Nutöffnung 9 einander zugeneigt, wobei ein Nutquerschnitt quer zu einer hier senkrecht zur Blattebene verlaufenden Längsrichtung L der Nut 3 im Wesentlichen schwalbenschwanzförmig ausgebildet ist. Ein jeweiliger Zentrierbolzen 4 ist korrespondierend zu dieser Nutform der Nut 3 ausgebildet und weist somit ebenfalls eine im Wesentlichen schwalbenschwanzförmige Außenkontur auf. Zur erleichterten Einführung der Zentrierbolzen 4 in die Nuten 3 dienen die im Wesentlichen trichterförmigen Eintrittsöffnungen 10 in Form von Einführschrägen. Die äußeren Ränder der Eintrittsöffnung in 10 weisen dabei Konturen entsprechend der Konturen der Nuten 3 auf.

Den Detaildarstellungen der Figuren 4a und 4b ist zu entnehmen, dass in der gezeigten Betriebsposition der Wendevorrichtung 2 ein Bolzenabstand b zwischen dem jeweiligen Zentrierbolzen 4 und der jeweiligen ersten Nutwand 7 vorherrscht, sodass sich die Zentrierbolzen 4 mit leichtem Spiel innerhalb der Nuten 3 befinden.

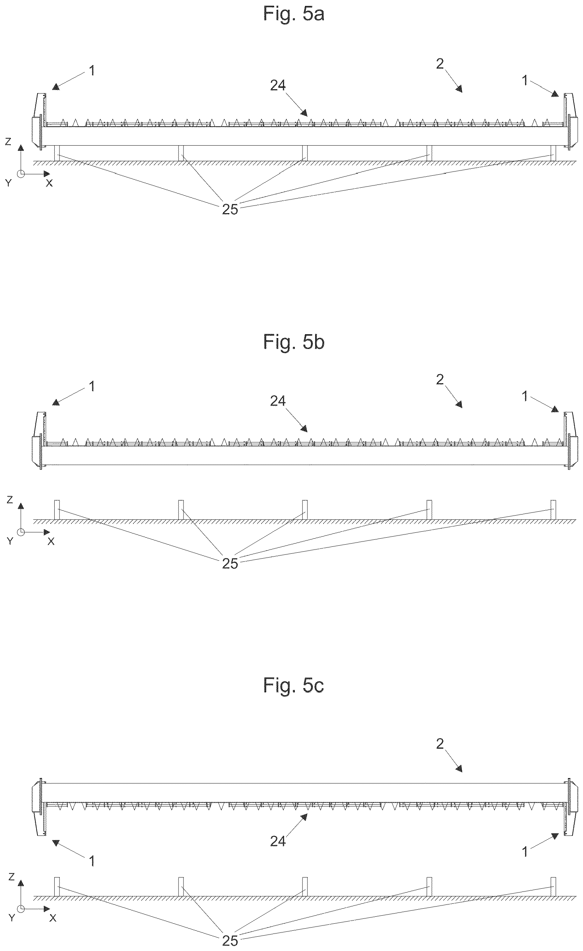

Nach Aufnahme der Formenpalette 5 mit Erstschale 24 wird einerseits die Formenpalette 5 an der Wendevorrichtung 2 verriegelt (z.B. in bekannter Weise mittels hier nicht näher dargestellter hydraulischer Bolzen) und andererseits wird die Erstschale 24 auf der Formenpalette 5 fixiert (z.B. in bekannter Weise mittels mittels hier nicht näher dargestellter Niederhalter). Dieser Zustand ist in Figur 5a dargestellt.

Als nächstes wird die Wendevorrichtung 2 mit Formenpalette 5 und Erstschale 24 angehoben (in Z-Richtung) und um 180° gewendet (siehe Figuren 5b und 5c).

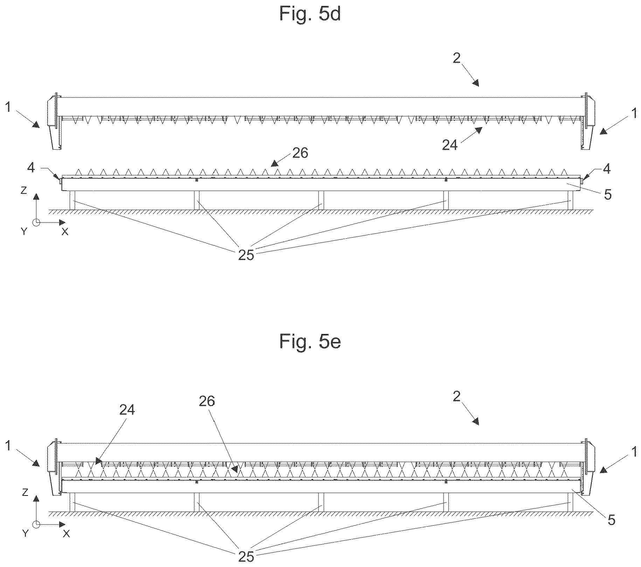

Dann wird eine weitere Formenpalette 5, auf der eine Zweitschale 26 (zweite Betonschicht mit frischem Beton) angeordnet ist, unter der Wendevorrichtung 2 platziert (siehe Figur 5d). An den stirnseitigen Enden (in X-Richtung) weist die Formenpalette 5 mit den Nuten 3 der Zentriervorrichtungen 1 korrespondierend ausgebildete Zentrierbolzen 4 auf.

Die um 180° gewendete Wendevorrichtung 2 mitsamt Erstschale 24 wird nun auf die Formenpalette 5 mit der Zweitschale 26 abgelassen (siehe Figur 5e).

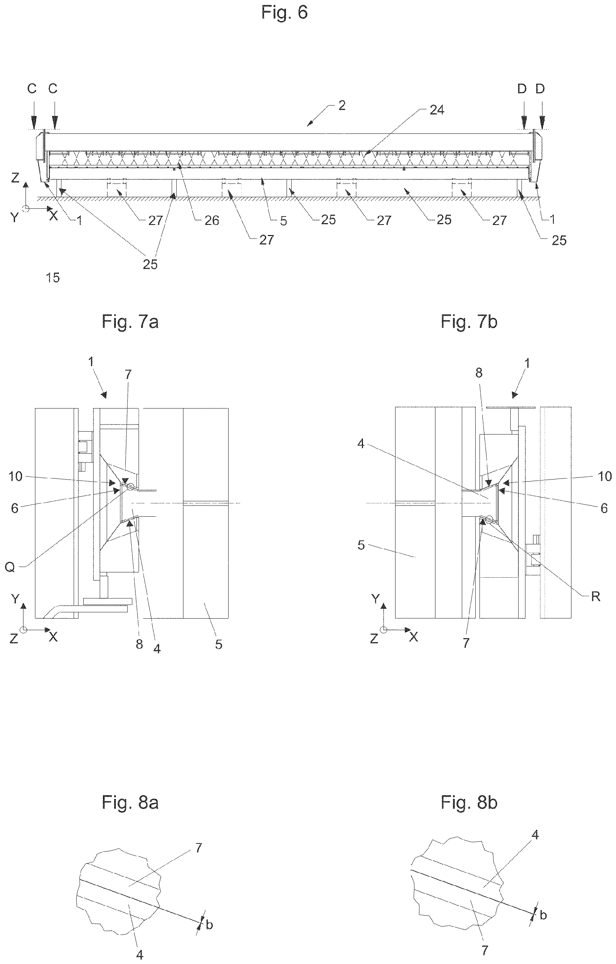

Die Formenpalette 5 mit der Zweitschale 26 steht kraftschlüssig auf einer Verdichtung umfassend mehrere Verdichtungseinrichtungen 27 (siehe Figur 6). Die Zentrierung der Formenpalette 5 mit der Zweitschale 26 erfolgt wieder über die Zentriervorrichtungen 1. Zur erleichterten Aufnahme der Zentrierbolzen 4 der Formenpalette 5 in die Nuten 3 weisen die Nuten 3 an ihren in Richtung der Zentrierbolzen 4 weisenden Enden hier nicht ersichtliche aufgeweitete Eintrittsöffnungen 10 in Form von Einführschrägen auf. Der Abstand zwischen der Formenpalette 5 mit der Erstschale 24 und der Formenpalette 5 mit der Zweitschale 26 wird in bekannter Weise über hier nicht näher dargestellte Distanzhalter definiert.

Die beiden Formenpaletten 5 mit Erstschale 24 und Zweitschale 26 liegen nun übereinander. Hier werden vor dem Verdichten die Formenpaletten 5 von Erstschale 24 und Zweitschale 26 verspannt, indem die Zentrierbolzen 4 der Formenpaletten 5 in den Nuten 3 fixiert werden.

Die Figuren 7a bis 8b zeigen diesen Zustand, in dem die Formenpaletten 5 von Erstschale 24 und Zweitschale 26 bzw. deren Zentrierbolzen 4 verspannt wurden. Figur 7a zeigt eine vergrößerte Detaildarstellung gemäß der Sichtlinie C-C der Figur 6, Figur 3b zeigt eine vergrößerte Detaildarstellung gemäß der Sichtlinie D-D der Figur 6, Figur 8a zeigt eine vergrößerte Detaildarstellung des mit einem Kreis markierten Bereichs Q der Figur 7a und Figur 8b zeigt eine vergrößerte Detaildarstellung des mit einem Kreis markierten Bereichs R der Figur 7b.

Zum Verspannen umfasst jede der beiden Zentriervorrichtungen 1 eine in diesen Darstellungen nicht ersichtliche Spannvorrichtung 11 zur Fixierung der Zentrierbolzen 4 der beiden übereinander angeordneten Formenpaletten 5 in der Nut 3. Im beschriebenen Beispiel umfasst jede der beiden Spannvorrichtungen 11 eine sich abschnittsweise entlang einer Längserstreckung der Nut 3 in Längsrichtung L erstreckende Klemmvorrichtung 12, die zwischen einer Freigabeposition und einer Klemmposition bewegbar ist (in einer Richtung quer zur Längsrichtung L), wobei eine Klemmfläche 13 der wenigstens einen Klemmvorrichtung 12 einen Abschnitt der ersten Nutwand 7 ausbildet (siehe Figur 9), wobei ein Abstand a zwischen den zwei sich zugewandten Nutwänden 7, 8 in der Klemmposition kleiner ist als in der Freigabeposition.

Die Darstellungen in den Figuren 7a bis 8b zeigen den verspannten Zustand, in dem die Klemmvorrichtungen 12 in Klemmpositionen bewegt wurden. Es wurde jeweils die Klemmvorrichtung 12 mitsamt Klemmfläche 13, welche einen Abschnitt der ersten Nutwand 7 ausbildet, in Richtung der zweiten Nutwand 8 bewegt und dadurch die in der Nut 3 übereinander angeordneten Zentrierbolzen 4 der beiden Formenpaletten 5 von Erstschale 24 und Zweitschale 26 zwischen erster Nutwand 7 und zweiter Nutwand 8 eingeklemmt. Die Detaildarstellungen in den Figuren 8a und 8b zeigen jeweils den unmittelbar an der ersten Nutwand 7 anliegenden Zentrierbolzen 4 (der Bolzenabstand b ist auf null reduziert).

Gemäß dem in den Figuren 7a und 7b dargestellten Koordinatensystem erfolgt eine Bewegung der ersten Nutwand 7 in Y-Richtung. Durch die Schwalbenschwanzform von Nut 3 und Zentrierbolzen 4 wird ermöglicht, dass die von den Klemmvorrichtungen 12 auf die Zentrierbolzen 4 eingebrachte Kraft zusätzlich auch in X-Richtung wirkt, wodurch die Formenpaletten 5 auf Zug belastet werden. Weiterhin entsteht beim Spannen ein Formschluss sowohl in X-Richtung als auch in Y-Richtung. Durch das Verspannen wird außerdem ein Ausschlagen der Klemmbacken in Form der Klemmvorrichtungen 12 minimiert, da es dadurch beim Verdichtungsprozess mittels der Verdichtungseinrichtungen 27 zu keinen Relativbewegungen zwischen den Zentriervorrichtungen 1 und den Formenpaletten 5 kommt.

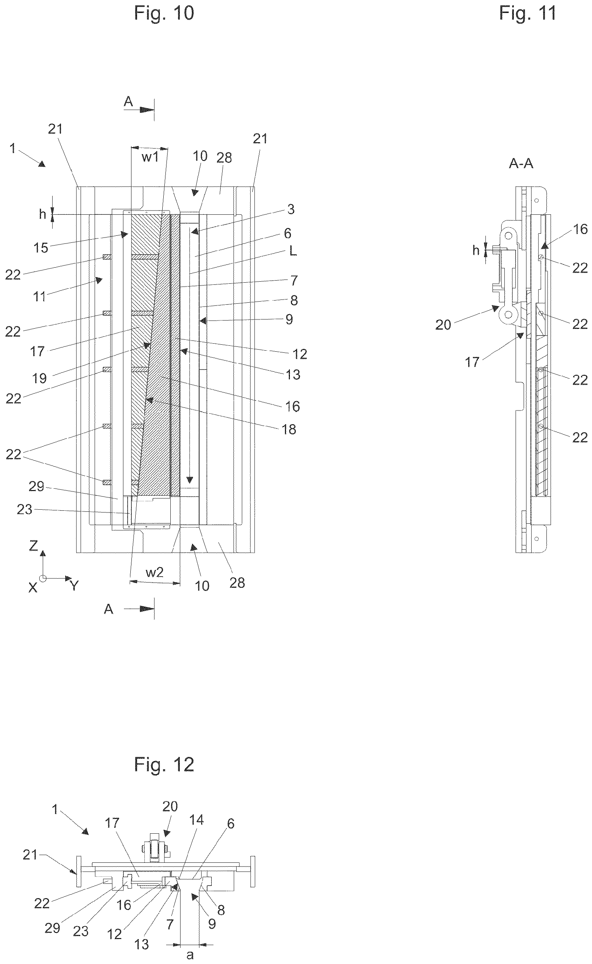

Die Figuren 9 bis 12 zeigen eine vorgeschlagene Zentriervorrichtung 1 umfassend eine Spannvorrichtung 11 mit Klemmvorrichtung 12, wobei sich die Klemmvorrichtung 12 in einer Freigabeposition befindet, in verschiedenen Ansichten. Figur 9 zeigt eine perspektivische Ansicht auf die Zentriervorrichtung 1. Figur 10 zeigt eine Frontansicht auf die Zentriervorrichtung 1, wobei eine Abdeckblende der Bewegungsvorrichtung 15 in der Darstellung ausgeblendet wurde, um nähere Details der Bewegungsvorrichtung 15 erkenntlich zu machen. Figur 11 zeigt einen Querschnitt durch die Zentriervorrichtung 1 gemäß Schnittlinie A-A in Figur 10. Figur 12 zeigt eine Draufsicht auf die Zentriervorrichtung 1, wobei die Einführvorrichtung 28 in der Darstellung ausgeblendet wurde, um nähere Details erkenntlich zu machen.

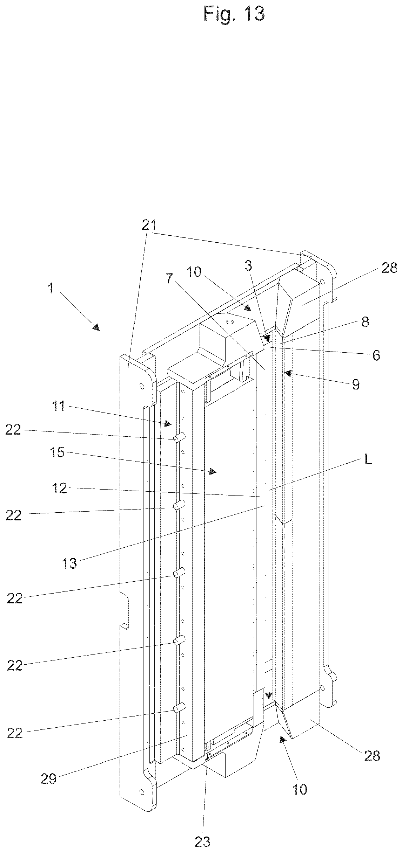

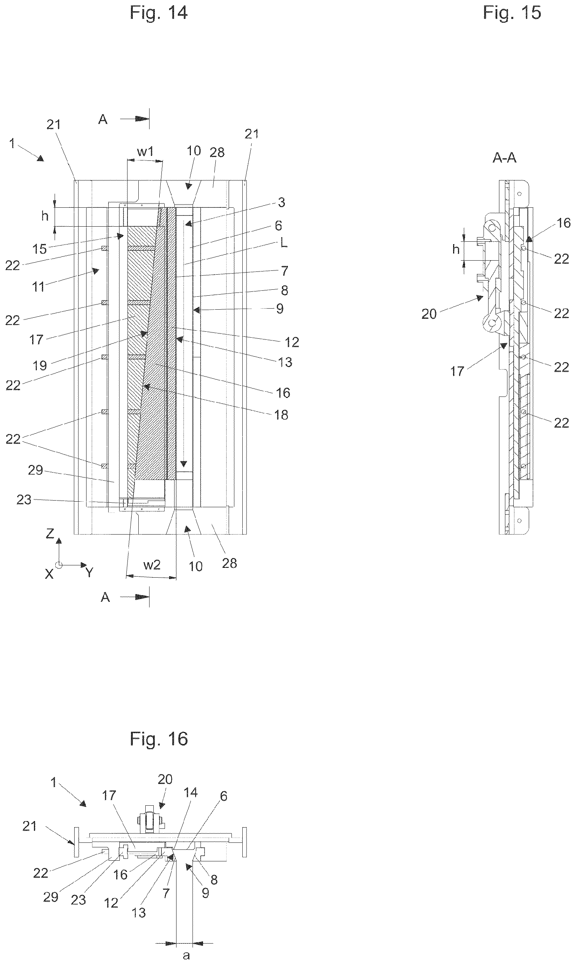

Die Figuren 13 bis 16 zeigen die Zentriervorrichtung 1 gemäß der Figuren 9 bis 12, wobei sich die Klemmvorrichtung 12 in einer Klemmposition befindet, in verschiedenen Ansichten. Figur 13 zeigt eine perspektivische Ansicht auf die Zentriervorrichtung 1. Figur 14 zeigt eine Frontansicht auf die Zentriervorrichtung 1, wobei eine Abdeckblende der Bewegungsvorrichtung 15 in der Darstellung ausgeblendet wurde, um nähere Details der Bewegungsvorrichtung 15 erkenntlich zu machen. Figur 15 zeigt einen Querschnitt durch die Zentriervorrichtung 1 gemäß Schnittlinie A-A in Figur 14. Figur 16 zeigt eine Draufsicht auf die Zentriervorrichtung 1, wobei die Einführvorrichtung 28 in der Darstellung ausgeblendet wurde, um nähere Details erkenntlich zu machen.

Die in den Figuren 9 bis 16 gezeigte Zentriervorrichtung 1 umfasst einen Grundrahmen 21, mit dem die Zentriervorrichtung 1 fest mit einer Wendevorrichtung 2 verbunden werden kann. Die Zentriervorrichtung 1 weist eine sich entlang einer Längsrichtung L verlaufende Nut 3 zur Aufnahme von Zentrierbolzen 4 von Formenpaletten 5 auf. Die Nut 3 umfasst einen Nutboden 6 und zwei sich zugewandte Nutwände 7, 8, die sich zwischen dem Nutboden 6 und einer dem Nutboden 6 gegenüberliegenden Nutöffnung 9 erstrecken. Ausgehend vom Nutboden 6 verjüngt sich die Nut 3 in Richtung der Nutöffnung 9. In der gezeigten Ausführungsvariante weist die Nut 3 entlang der Längsrichtung L eine erste Nutwand 7 und eine von der ersten Nutwand 7 beabstandete und der ersten Nutwand 7 zugewandte zweite Nutwand 8 auf, wobei die erste Nutwand 7 und die zweite Nutwand 8 ausgehend vom Nutboden 6 in Richtung der Nutöffnung 9 schräg zum Nutboden 6 verlaufen. Die erste Nutwand 7 und die zweite Nutwand 8 sind in Richtung der Nutöffnung 9 einander zugeneigt, wobei ein Nutquerschnitt quer zur Längsrichtung L der Nut 3 im Wesentlichen schwalbenschwanzförmig ausgebildet ist. Die Nut 3 weist an beiden Enden in Längsrichtung L der Nut 3 jeweils eine im Wesentlichen trichterförmige Eintrittsöffnung 10 auf. Die Eintrittsöffnungen 10 sind in Form von Einführschrägen in baulich gesonderten Einführvorrichtungen 28 ausgebildet. Die äußeren Ränder der Eintrittsöffnungen 10 weisen eine Kontur entsprechend der Kontur der Nut 3 auf. Die solcherart im Vergleich zur Nut 3 aufgeweiteten Eintrittsöffnungen 10 erleichtern das Einführen der Zentrierbolzen 4 in die Nut 3.

Die Zentriervorrichtung 1 umfasst des Weiteren eine Spannvorrichtung 11 zur Fixierung wenigstens eines Zentrierbolzens 4 in der Nut 3, wobei der wenigstens eine Zentrierbolzen 4 zwischen den zwei sich zugewandten Nutwänden 7, 8 aufnehmbar und durch die Spannvorrichtung 11 fixierbar ist. Die Spannvorrichtung 11 umfasst in der gezeigten Variante eine sich abschnittsweise entlang einer Längserstreckung der Nut 3 in Längsrichtung L erstreckende Klemmvorrichtung 12, wobei eine Klemmfläche 13 der Klemmvorrichtung 12 einen Abschnitt der ersten Nutwand 7 ausbildet. Die Klemmvorrichtung 12 ist in einer Richtung quer zur Längsrichtung L zwischen einer Freigabeposition und einer Klemmposition bewegbar, wobei ein Abstand a zwischen den zwei sich zugewandten Nutwänden 7, 8 in der Klemmposition kleiner ist als in der Freigabeposition (vergleiche hierzu insbesondere die Figuren 12 und 16).

Die Bewegung der Klemmvorrichtung 12 quer zur Längsrichtung L erfolgt entlang einer der Nutöffnung 9 zugewandten Oberfläche des Nutbodens 6. Zur Begrenzung der Bewegung der Klemmvorrichtung 12 in Richtung der Klemmposition weist der Nutboden 6 einen Anschlag 14 auf.

Zur Bewegung der Klemmvorrichtung 12 zwischen der Freigabeposition und der Klemmposition umfasst die Spannvorrichtung 11 eine Bewegungsvorrichtung 15. Die Bewegungsvorrichtung 15 umfasst eine mit der Klemmvorrichtung 12 verbundene und quer zur Längsrichtung L bewegbare Einschubvorrichtung 16 und eine auf die Einschubvorrichtung 16 einwirkende und in Längsrichtung L bewegbare Längsschubvorrichtung 17. Die Einschubvorrichtung 16 weist eine in Längsrichtung L rampenförmige Wirkfläche 18 auf und die Längsschubvorrichtung 17 weist eine an der rampenförmigen Wirkfläche 18 anliegende, gegenläufig zur rampenförmigen Wirkfläche 18 ausgebildete rampenförmige Betätigungsfläche 19 auf. Dadurch ist durch eine Bewegung der Längsschubvorrichtung 17 in Längsrichtung L die Einschubvorrichtung 16 quer zur Längsrichtung L bewegbar.

Die Bewegungsvorrichtung 15 umfasst zur Bewegung der Längsschubvorrichtung 17 eine mit der Längsschubvorrichtung 17 verbundene Antriebsvorrichtung 20, die im gezeigten Beispiel in Form eines Linearantriebs ausgebildet ist. Die Figuren 10 und 11 zeigen eine Stellung des Linearantriebs mit minimalem Hub h, bei der sich die Klemmvorrichtung 12 in einer Freigabeposition befindet und die Figuren 14 und 15 zeigen eine Stellung des Linearantriebs mit maximalem Hub h, bei der sich die Klemmvorrichtung 12 in einer Klemmposition befindet.

Im gezeigten Beispiel sind die Einschubvorrichtung 16 und die Längsschubvorrichtung 17 im Wesentlichen keilförmig ausgebildet (in Form von gegenläufigen Keilen). Die Längsschubvorrichtung 17 weist einen ersten Keilwinkel w1 auf und die Einschubvorrichtung 16 weist einen zweiten Keilwinkel w2 auf. Längsschubvorrichtung 17 und Einschubvorrichtung 16 wirken als Keilgetriebe zur Umsetzung einer in Längsrichtung L der Nut 3 (entspricht der Z-Richtung gemäß dem in den Figuren 10 und 14 angegebenen Koordinatensystem) auf die Längsschubvorrichtung 17 einwirkenden Spannkraft. Eine derartige in Z-Richtung einwirkende Spannkraft wird durch die rampenförmige Wirkfläche 18 der Einschubvorrichtung 16 und die gegenläufig dazu ausgebildete rampenförmige Betätigungsfläche 19 der Längsschubvorrichtung 17 um 90° umgelenkt und bewirkt eine Bewegung der Einschubvorrichtung 16 in Y-Richtung (also in Richtung der gegenüberliegenden zweiten Nutwand 8).

Bei einer Bewegung der Längsschubvorrichtung 17 in Richtung ihrer Keilspitze bzw. ihres schmalen Keilendes gleitet die rampenförmige Betätigungsfläche 19 der Längsschubvorrichtung 17 entlang der rampenförmigen Wirkfläche 18 der Einschubvorrichtung 16 und die Einschubvorrichtung 16 wird quer in Richtung der gegenüberliegenden, zweiten Nutwand 8 eingefahren, wodurch sich die Klemmfläche 13 der mit der Einschubvorrichtung 16 verbundenen Klemmvorrichtung 12 in Richtung der gegenüberliegenden, zweiten Nutwand 8 bewegt und damit einen in der Nut 3 befindlichen Zentrierbolzen 4 zwischen den Nutwänden 7, 8 einklemmen kann.

Zur Führung der Längsschubvorrichtung 17 weist die Bewegungsvorrichtung 15 eine in Längsrichtung L verlaufende Längsführung 23 in Form einer Schlittenführung auf, entlang der die Längsschubvorrichtung 17 bewegbar ist. Zur Führung der Einschubvorrichtung 16 weist die Bewegungsvorrichtung 15 mehrere quer zur Längsrichtung L verlaufende Querführungen 22 in Form von Führungsstreben auf. Die Querführungen 22 sind an der Einschubvorrichtung 16 in Längsrichtung L jeweils voneinander beabstandet angeordnet und erstrecken sich ausgehend von der Wirkfläche 18 in einer der Klemmfläche 13 abgewandten Richtung quer zur Längsrichtung L durch mit den Querführungen 22 korrespondierend ausgebildete Führungslöcher einer ortsfesten Führungsschiene 29 hindurch. Die Querführungen 22 (und somit die Einschubvorrichtung 16) sind entlang der Führungslöcher der Führungsschiene 29 bewegbar. Im gezeigten Beispiel ist die Längsführung 23 an der Führungsschiene 29 angeordnet und weist Löcher auf, sodass sich die Führungslöcher in Y-Richtung über Führungsschiene 29 und daran angeordneter Längsführung 23 erstrecken.

Durch die Ausbildung von Längsschubvorrichtung 17 und Einschubvorrichtung 16 als Keilgetriebe wird durch die Keilübersetzung die Kraft vom Linearantrieb nochmals erhöht. So kann die vom Linearantrieb eingebrachte Spannkraft auf das bis zu 10-fache erhöht werden, d.h. die Klemmfläche 13 der Klemmvorrichtung 12 kann mit einer Klemmkraft, die bis zum 10-fachen der Spannkraft, die auf die Längsschubvorrichtung 17 einwirkt, beträgt, auf den Zentrierbolzen 4 einwirken. Die Spannkraft des Linearantriebs wird in Z-Richtung erzeugt und durch das Keilgetriebe in Y-Richtung umgelenkt. Hier erfolgt eine Verstärkung der Kraft aufgrund der Formgebung der Keile, die eine Übersetzung der Kraft bewirkt. Eine Dämpfung wird durch die Umlenkung der Kraft um 90° ausgeschlossen.

Beim Verspannen drückt die Klemmvorrichtung 12 in der Nut 3 befindliche Zentrierbolzen 4 in Richtung der zweiten Nutwand 8. Durch eine Schwalbenschwanzkontur von Zentrierbolzen 4 und die Negativform der Nut 3 verursacht die Spannkraft in Y-Richtung auch eine Zugkraft in X-Richtung. In X-Richtung und in Y-Richtung entsteht so ein Formschluss und in Z-Richtung ein Kraftschluss. In Z-Richtung sind keine nennenswerten Kräfte vorhanden und somit ist in dieser Richtung ein Kraftschluss ausreichend. Um die Verspannung zu lösen, muss der Linearantrieb eine Bewegung in die entgegengesetzte Richtung machen.

### Bezugszeichenliste:

- 1: Zentriervorrichtung
- 2: Wendevorrichtung
- 3: Nut
- 4: Zentrierbolzen
- 5: Formenpalette
- 6: Nutboden
- 7: erste Nutwand
- 8: zweite Nutwand
- 9: Nutöffnung
- 10: Eintrittsöffnung
- 11: Spannvorrichtung
- 12: Klemmvorrichtung
- 13: Klemmfläche
- 14: Anschlag
- 15: Bewegungsvorrichtung
- 16: Einschubvorrichtung
- 17: Längsschubvorrichtung
- 18: Wirkfläche
- 19: Betätigungsfläche
- 20: Antriebsvorrichtung
- 21: Grundrahmen
- 22: Querführung
- 23: Längsführung
- 24: Erstschale
- 25: Bockrolle
- 26: Zweitschale
- 27: Verdichtungseinrichtung
- 28: Einführvorrichtung
- 29: Führungsschiene
- L: Längsrichtung
- a: Abstand
- b: Bolzenabstand
- h: Hub
- w1: erster Keilwinkel
- w2: zweiter Keilwinkel

## Patentansprüche

1. Wendevorrichtung (2), insbesondere Wendetraverse, zum Herstellen eines mehrschaligen Betonelements, mit wenigstens einer Zentriervorrichtung (1), vorzugsweise zwei voneinander beabstandeten und einander zugewandten Zentriervorrichtungen (1), wobei die wenigstens eine Zentriervorrichtung (1) eine sich entlang einer Längsrichtung (L) verlaufende Nut (3) zur Aufnahme eines Zentrierbolzens (4) einer Formenpalette (5) umfasst, wobei die Nut (3) einen Nutboden (6) und zwei sich zugewandte Nutwände (7, 8) umfasst, die sich zwischen dem Nutboden (6) und einer dem Nutboden (6) gegenüberliegenden Nutöffnung (9) erstrecken, **dadurch gekennzeichnet, dass** sich die Nut (3) ausgehend vom Nutboden (6) in Richtung der Nutöffnung (9) zumindest abschnittsweise verjüngt.

2. Wendevorrichtung nach dem vorangehenden Anspruch, **dadurch gekennzeichnet, dass** die Nut (3) entlang der Längsrichtung (L) eine erste Nutwand (7) und eine von der ersten Nutwand (7) beabstandete und der ersten Nutwand (7) zugewandte zweite Nutwand (8) aufweist, wobei die erste Nutwand (7) und/oder die zweite Nutwand (8) ausgehend vom Nutboden (6) in Richtung der Nutöffnung (9) zumindest abschnittsweise schräg zum Nutboden (6) verläuft bzw. verlaufen.

3. Wendevorrichtung nach dem vorangehenden Anspruch, **dadurch gekennzeichnet, dass** die erste Nutwand (7) und die zweite Nutwand (8) in Richtung der Nutöffnung (9) einander zugeneigt sind, wobei vorzugsweise ein Nutquerschnitt quer zur Längsrichtung (L) der Nut (3) im Wesentlichen schwalbenschwanzförmig ausgebildet ist.

4. Wendevorrichtung nach einem der vorangehenden Ansprüche, **dadurch gekennzeichnet, dass** die Nut (3) an wenigstens einem Ende in Längsrichtung (L) der Nut (3) eine im Vergleich zur Nut (3) aufgeweitete, vorzugsweise im Wesentlichen trichterförmige, Eintrittsöffnung (10) aufweist.

5. Wendevorrichtung nach einem der vorangehenden Ansprüche, **dadurch gekennzeichnet, dass** die wenigstens eine Zentriervorrichtung (1) eine Spannvorrichtung (11) zur Fixierung des Zentrierbolzens (4) in der Nut (3) umfasst, wobei der Zentrierbolzen (4) zwischen den zwei sich zugewandten Nutwänden (7, 8) aufnehmbar und durch die Spannvorrichtung (11) fixierbar ist, wobei die Spannvorrichtung (11) wenigstens eine sich zumindest abschnittsweise entlang einer Längserstreckung der Nut (3) in Längsrichtung (L) erstreckende Klemmvorrichtung (12) umfasst, die zwischen einer Freigabeposition und einer Klemmposition bewegbar ist, wobei eine Klemmfläche (13) der wenigstens einen Klemmvorrichtung (12) eine der zwei sich zugewandten Nutwände (7, 8) oder einen Abschnitt derselben ausbildet, wobei ein Abstand (a) zwischen den zwei sich zugewandten Nutwänden (7, 8) in der Klemmposition kleiner ist als in der Freigabeposition.

6. Wendevorrichtung nach dem vorangehenden Anspruch, **dadurch gekennzeichnet, dass** der Nutboden (6) zur Begrenzung der Bewegung der wenigstens einen Klemmvorrichtung (12) in Richtung der Klemmposition einen Anschlag (14) aufweist.

7. Wendevorrichtung nach einem der beiden vorangehenden Ansprüche, **dadurch gekennzeichnet, dass** die Spannvorrichtung (11) eine Bewegungsvorrichtung (15) zur Bewegung der wenigstens einen Klemmvorrichtung (12) zwischen der Freigabeposition und der Klemmposition umfasst.

8. Wendevorrichtung nach dem vorangehenden Anspruch, **dadurch gekennzeichnet, dass** die Bewegungsvorrichtung (15) eine mit der wenigstens einen Klemmvorrichtung (12) verbundene und quer zur Längsrichtung (L) bewegbare Einschubvorrichtung (16) und eine auf die Einschubvorrichtung (16) einwirkende und in Längsrichtung (L) bewegbare Längsschubvorrichtung (17) umfasst, wobei die Einschubvorrichtung (16) eine in Längsrichtung (L) rampenförmige Wirkfläche (18) aufweist, wobei die Längsschubvorrichtung (17) eine an der rampenförmigen Wirkfläche (18) anliegende, gegenläufig zur rampenförmigen Wirkfläche (18) ausgebildete rampenförmige Betätigungsfläche (19) aufweist, wobei durch eine Bewegung der Längsschubvorrichtung (17) in Längsrichtung (L) die Einschubvorrichtung (16) quer zur Längsrichtung (L) bewegbar ist.

9. Wendevorrichtung nach dem vorangehenden Anspruch, **dadurch gekennzeichnet, dass** die Bewegungsvorrichtung (15) wenigstens eine in Längsrichtung (L) verlaufende Längsführung (23) zur Führung der Längsschubvorrichtung (17) aufweist.

10. Wendevorrichtung nach einem der beiden vorangehenden Ansprüche, **dadurch gekennzeichnet, dass** die Bewegungsvorrichtung (15) wenigstens eine quer zur Längsrichtung (L) verlaufende Querführung (22) zur Führung der Einschubvorrichtung (16) aufweist.

11. Wendevorrichtung nach einem der drei vorangehenden Ansprüche, **dadurch gekennzeichnet, dass** die Bewegungsvorrichtung (15) zur Bewegung der Längsschubvorrichtung (17) eine mit der Längsschubvorrichtung (17) verbundene Antriebsvorrichtung (20), vorzugsweise einen Linearantrieb, umfasst.

12. Wendevorrichtung nach einem der vier vorangehenden Ansprüche, **dadurch gekennzeichnet, dass** die Einschubvorrichtung (16) in Richtung der Längsschubvorrichtung (17) vorgespannt ist.

13. Anordnung mit einer Wendevorrichtung (2) nach einem der Ansprüche 1 bis 12 und wenigstens einer Formenpalette (5) zur Aufnahme einer Schale eines mehrschaligen Betonelements, wobei die Formenpalette (5) an wenigstens einem stirnseitigen Ende wenigstens einen Zentrierbolzen (4) aufweist, der in die Nut (3) der wenigstens einen Zentriervorrichtung (1) einführbar ist, wobei der wenigstens eine Zentrierbolzen (4) korrespondierend zur Nut (3), vorzugsweise im Wesentlichen schwalbenschwanzförmig, ausgebildet ist.

## Claims

1. Turning device (2), in particular turning bar, for producing a multi-shelled concrete element, with at least one centring device (1), preferably two centring devices (1) spaced apart from one another and facing one another, wherein the at least one centring device (1) comprises a groove (3) running along a longitudinal direction (L) for receiving a centring pin (4) of a form pallet (5), wherein the groove (3) comprises a groove bottom (6) and two groove walls (7, 8) which face one another, and which extend between the groove bottom (6) and a groove opening (9) opposite the groove bottom (6), **characterized in that** the groove (3) narrows at least in sections starting from the groove bottom (6) in the direction of the groove opening (9).

2. Turning device according to the preceding claim, **characterized in that** the groove (3) along the longitudinal direction (L) has a first groove wall (7) and a second groove wall (8) spaced apart from the first groove wall (7) and facing the first groove wall (7), wherein the first groove wall (7) and/or the second groove wall (8) runs or run diagonally to the groove bottom (6) at least in sections starting from the groove bottom (6) in the direction of the groove opening (9).

3. Turning device according to the preceding claim, **characterized in that** the first groove wall (7) and the second groove wall (8) are leaned towards one another in the direction of the groove opening (9), wherein preferably a groove cross section transverse to the longitudinal direction (L) of the groove (3) is formed substantially dovetail-shaped.

4. Turning device according to one of the preceding claims, **characterized in that** the groove (3), at least at one end in the longitudinal direction (L) of the groove (3), has a, preferably substantially funnel-shaped, inlet opening (10) that is widened compared with the groove (3).

5. Turning device according to one of the preceding claims, **characterized in that** the at least one centring device (1) comprises a tensioning device (11) for fixing the centring pin (4) in the groove (3), wherein the centring pin (4) can be received between the two groove walls (7, 8) facing one another and can be fixed by the tensioning device (11), wherein the tensioning device (11) comprises at least one clamping device (12), which extends at least in sections along a longitudinal extent of the groove (3) in the longitudinal direction (L) and which is movable between a release position and a clamping position, wherein a clamping surface (13) of the at least one clamping device (12) forms one of the two groove walls (7, 8) facing one another or a section thereof, wherein a distance (a) between the two groove walls (7, 8) facing one another is smaller in the clamping position than in the release position.

6. Turning device according to the preceding claim, **characterized in that** the groove bottom (6) has a stop (14) for limiting the movement of the at least one clamping device (12) in the direction of the clamping position.

7. Turning device according to one of the two preceding claims, **characterized in that** the tensioning device (11) comprises a movement device (15) for moving the at least one clamping device (12) between the release position and the clamping position.

8. Turning device according to the preceding claim, **characterized in that** the movement device (15) comprises an insertion device (16) connected to the at least one clamping device (12) and movable transverse to the longitudinal direction (L) and a longitudinal pushing device (17) acting on the insertion device (16) and movable in the longitudinal direction (L), wherein the insertion device (16) has an effective surface (18) which is ramp-like in the longitudinal direction, wherein the longitudinal pushing device (17) has a ramp-like actuating surface (19) abutting the ramp-like effective surface (18) and formed in the opposite direction to the ramp-like effective surface (18), wherein the insertion device (16) is movable transverse to the longitudinal direction (L) through a movement of the longitudinal pushing device (17) in the longitudinal direction (L).

9. Turning device according to the preceding claim, **characterized in that** the movement device (15) has at least one longitudinal guide (23) running in the longitudinal direction (L) for guiding the longitudinal pushing device (17).

10. Turning device according to one of the two preceding claims, **characterized in that** the movement device (15) has at least one transverse guide (22) running transverse to the longitudinal direction (L) for guiding the insertion device (16).

11. Turning device according to one of the three preceding claims, **characterized in that**, for moving the longitudinal pushing device (17), the movement device (15) comprises a drive device (20), preferably a linear drive, connected to the longitudinal pushing device (17).

12. Turning device according to one of the four preceding claims, **characterized in that** the insertion device (16) is pretensioned in the direction of the longitudinal pushing device (17).

13. Arrangement with a turning device (2) according to one of claims 1 to 12 and at least one form pallet (5) for receiving a shell of a multi-shelled concrete element, wherein the form pallet (5), at least at one front end, has at least one centring pin (4), which can be inserted into the groove (3) of the at least one centring device (1), wherein the at least one centring pin (4) is formed corresponding to the groove (3), preferably substantially dovetail-shaped.

## Revendications

1. Dispositif de retournement (2), en particulier traverse de retournement, destiné à fabriquer un élément en béton multicouche, avec au moins un dispositif de centrage (1), de préférence deux dispositifs de centrage (1) espacés l'un de l'autre et tournés l'un vers l'autre, dans lequel l'au moins un dispositif de centrage (1) comprend une rainure (3) s'étendant le long d'une direction longitudinale (L), destinée à recevoir un boulon de centrage (4) d'une palette de mise en forme (5), dans lequel la rainure (3) comprend un fond de rainure (6) et deux parois de rainure (7, 8) tournées l'une vers l'autre, qui s'étendent entre le fond de rainure (6) et une ouverture de rainure (9) faisant face au fond de rainure (6), **caractérisé en ce que** la rainure (3) se rétrécit au moins par endroits en partant du fond de rainure (6) en direction de l'ouverture de rainure (9).

2. Dispositif de retournement selon la revendication précédente, **caractérisé en ce que** la rainure (3) présente le long de la direction longitudinale (L) une première paroi de rainure (7) et une deuxième paroi de rainure (8) espacée de la première paroi de rainure (7) et tournée vers la première paroi de rainure (7), dans lequel la première paroi de rainure (7) et/ou la deuxième paroi de rainure (8) s'étend ou s'étendent au moins par endroits de manière oblique par rapport au fond de rainure (6) en partant du fond de rainure (6) en direction de l'ouverture de rainure (9).

3. Dispositif de retournement selon la revendication précédente, **caractérisé en ce que** la première paroi de rainure (7) et la deuxième paroi de rainure (8) sont inclinées l'une vers l'autre en direction de l'ouverture de rainure (9), dans lequel de préférence une section transversale de rainure est réalisée sensiblement en forme de queue d'aronde de manière transversale par rapport à la direction longitudinale (L) de la rainure (3).

4. Dispositif de retournement selon l'une quelconque des revendications précédentes, **caractérisé en ce que** la rainure (3) présente, sur au moins une extrémité dans la direction longitudinale (L) de la rainure (3), une ouverture d'entrée (10) élargie en comparaison avec la rainure (3), de préférence sensiblement en forme d'entonnoir.

5. Dispositif de retournement selon l'une quelconque des revendications précédentes, **caractérisé en ce que** l'au moins un dispositif de centrage (1) comprend un dispositif de serrage (11) destiné à fixer le boulon de centrage (4) dans la rainure (3), dans lequel le boulon de centrage (4) peut être reçu entre les deux parois de rainure (7, 8) tournées l'une vers l'autre et peut être fixé par le dispositif de serrage (11), dans lequel le dispositif de serrage (11) comprend au moins un dispositif de blocage (12) s'étendant dans la direction longitudinale (L) au moins par endroits le long d'une extension longitudinale de la rainure (3), qui peut être déplacé entre une position de déblocage et une position de blocage, dans lequel une surface de blocage (13) de l'au moins un dispositif de blocage (12) réalise une des deux parois de rainure (7, 8) tournées l'une vers l'autre ou une section de celles-ci, dans lequel une distance (a) entre les deux parois de rainure (7, 8) tournées l'une vers l'autre est inférieure dans la position de blocage à celle dans la position de déblocage.

6. Dispositif de retournement selon la revendication précédente, **caractérisé en ce que** le fond de rainure (6) présente une butée (14) pour limiter le déplacement de l'au moins un dispositif de blocage (12) en direction de la position de blocage.

7. Dispositif de retournement selon l'une quelconque des deux revendications précédentes, **caractérisé en ce que** le dispositif de serrage (11) comprend un dispositif de déplacement (15) pour déplacer l'au moins un dispositif de blocage (12) entre la position de déblocage et la position de blocage.

8. Dispositif de retournement selon la revendication précédente, **caractérisé en ce que** le dispositif de déplacement (15) comprend un dispositif d'insertion par glissement (16) relié à l'au moins un dispositif de blocage (12) et pouvant être déplacé de manière transversale par rapport à la direction longitudinale (L) et un dispositif de poussée longitudinale (17) agissant sur le dispositif d'insertion par glissement (16) et pouvant être déplacé dans la direction longitudinale (L), dans lequel le dispositif d'insertion par glissement (16) présente une surface active (18) en forme de rampe dans la direction longitudinale (L), dans lequel le dispositif de poussée longitudinale (17) présente une surface d'actionnement (19) en forme de rampe reposant sur la surface active (18) en forme de rampe, réalisée à l'opposé de la surface active (18) en forme de rampe, dans lequel le dispositif d'insertion par glissement (16) peut être déplacé de manière transversale par rapport à la direction longitudinale (L) par un déplacement du dispositif de poussée longitudinale (17) dans la direction longitudinale (L).

9. Dispositif de retournement selon la revendication précédente, **caractérisé en ce que** le dispositif de déplacement (15) présente au moins un guide longitudinal (23) s'étendant dans la direction longitudinale (L) pour guider le dispositif de poussée longitudinale (17).

10. Dispositif de retournement selon l'une quelconque des deux revendications précédentes, **caractérisé en ce que** le dispositif de déplacement (15) présente au moins un guide transversal (22) s'étendant de manière transversale par rapport à la direction longitudinale (L) pour guider le dispositif d'insertion par glissement (16).

11. Dispositif de retournement selon l'une quelconque des trois revendications précédentes, **caractérisé en ce que** le dispositif de déplacement (15) comprend pour déplacer le dispositif de poussée longitudinale (17) un dispositif d'entraînement (20) relié au dispositif de poussée longitudinale (17), de préférence un entraînement linéaire.

12. Dispositif de retournement selon l'une quelconque des quatre revendications précédentes, **caractérisé en ce que** le dispositif d'insertion par glissement (16) est précontraint en direction du dispositif de poussée longitudinale (17).

13. Ensemble avec un dispositif de retournement (2) selon l'une quelconque des revendications 1 à 12 et au moins une palette de mise en forme (5) destinée à recevoir une couche d'un élément en béton multicouche, dans lequel la palette de mise en forme (5) présente sur au moins une extrémité côté frontal au moins un boulon de centrage (4), qui peut être introduit dans la rainure (3) de l'au moins un dispositif de centrage (1), dans lequel l'au moins un boulon de centrage (4) est réalisé de manière correspondante à la rainure (3) de préférence sensiblement en forme de queue d'aronde.
